# EUROPÄISCHE PATENTSCHRIFT

(11) **EP 1 972 514 B1**
(45) Veröffentlichungstag und Bekanntmachung des Hinweises auf die Patenterteilung: **27.02.2013**
(21) Anmeldenummer: 08005110.5
(22) Anmeldetag: 19.03.2008
(51) Int. Cl.: B60T 8/88

(54) **Kraftfahrzeug mit einem X-by-wire-System und Verfahren zum Betreiben eines X-by-wire-Systems eines Kraftfahrzeugs**
Motor vehicle with an x-by-wire system and method for operating an x-by-wire system of a motor vehicle
Véhicule automobile doté d'un système X-by-wire et procédé de fonctionnement d'un système X-by-wire d'un véhicule automobile

(30) Priorität: 21.03.2007 DE 102007013511
(43) Veröffentlichungstag der Anmeldung: 24.09.2008
(73) Patentinhaber: AUDI AG, 85045 Ingolstadt (DE)
(72) Erfinder: Kischkat, Ralf, Dr., 85057 Ingolstadt (DE)
(74) Vertreter: Thielmann, Frank

(56) Entgegenhaltungen:
- EP-A- 0 805 084
- EP-A- 1 541 437
- DE-A1- 10 248 843
- DE-A1- 19 826 132
- DE-A1- 19 909 496
- DE-A1- 19 937 156
- DE-A1- 19 940 960
- DE-A1-102004 008 910
- DE-C1- 19 742 988
- FR-A- 2 843 353
- US-A1- 2003 076 221

## Beschreibung

Die Erfindung betrifft ein Kraftfahrzeug mit einem X-by-wire-System der im Oberbegriff des Patentanspruchs 1 angegebenen Art sowie ein Verfahren zum Betreiben eines X-by-wire-Systems eines Kraftfahrzeugs der im Oberbegriff des Patentanspruchs 11 angegebenen Art.

Als X-by-wire-Systeme werden üblicherweise Kontrollsysteme für Kraftfahrzeuge bezeichnet, bei welchen ein Fahrerwunsch wie Lenken (steer-by-wire), Beschleunigen (drive-by-wire), Bremsen (brake-by-wire) oder Schalten (shift-by-wire) nicht mehr durch eine mechanische Kraftübertragung, beispielsweise über eine Lenksäule, Zugseile, Schubstangen oder dergleichen, sondern von zugeordneten Erfassungseinrichtungen mit entsprechenden Sensoren erfasst wird. Diese wandeln die mechanischen Steuersignale in den Fahrerwunsch charakterisierende Daten um und übertragen diese im Normalfall über ein Kommunikationssystem an entsprechende Steuersysteme, welche den Fahrerwunsch in Abhängigkeit der jeweiligen Ausgestaltung des X-by-wire-Systems über mechatronische Aktuatoren wieder in mechanische Bewegung umsetzen. Die den Fahrerwunsch charakterisierenden Daten können dabei vor dem Austausch mit dem Steuersystem mit Hilfe von computergesteuerten Fahrdynamiksystemen modifiziert werden, um beispielsweise einen erhöhten Fahrkomfort zu verwirklichen oder um das Entstehen kritischer Fahrsituationen aufgrund von Fehlbedienungen des Fahrers bereits von vornherein ausschließen zu können.

Ein Kraftfahrzeug mit einem als "brake-by-wire" ausgebildeten X-by-wire-System ist dabei beispielsweise bereits aus der DE 101 18 263 A1 als bekannt zu entnehmen und umfasst als Erfassungseinrichtung ein Pedalmodul mit Pedalwegsensoren zum Erfassen eines Bremswunschs eines Fahrers des Kraftfahrzeugs. Die einen Bremswunsch charakterisierenden Daten werden über ein erstes Kommunikationssystem an eine als Radbremselektronik ausgebildete Steuereinrichtung mit zugeordneten Bremsaktuatoren übermittelt. Mit dem ersten Kommunikationssystem, welches als Bussystem des Kraftfahrzeugs ausgebildet ist, sind dabei weitere Fahrzeugkomponenten wie Fahrdynamikregelsysteme oder zusätzliche X-by-wire-Systeme gekoppelt. Aus Sicherheitsgründen muss - wie bei allen X-by-wire-Systemen - gewährleistet sein, dass die Daten auch bei einer Störung oder einem Ausfall des ersten Kommunikationssystems übertragen werden können, um das Fahrzeug zumindest mit einer reduzierten Notfall-Funktionalität verfügbar zu halten. Zu diesem Zweck ist als Rückfallsystem ein zweites, ebenfalls als Datenbus ausgebildetes Kommunikationssystem vorgesehen, mittels welchem die Erfassungs- und die Steuereinrichtung redundant gekoppelt sind. Bei einem Ausfall des ersten Kommunikationssystems kann ein Austausch von Daten dementsprechend über das zweite Kommunikationssystem durchgeführt und die hohen Sicherheits- und Fehlertoleranzanforderungen an X-by-wire-Systeme eingehalten werden.

Aus der DE 199 37 156 A1 ist ein elektrisch gesteuertes, dezentrales Steuersystem für ein Fahrzeug bekannt, welches als sogenanntes Brake-by-wire-System ausgebildet ist. Das Steuersystem umfasst Steuermodule, die jeweils über einen Aktuator jeweils ein als Radbremse ausgebildetes Stellelement des Fahrzeugs betätigen können. Weiterhin ist eine Betätigunseinrichtung zum Erfassen einer einen Fahrerwunsch charakterisierenden Betätigungsgröße vorgesehen. Die Kommunikation zwischen den Steuermodulen erfolgt über ein Kommunikationssystem.

Die DE 197 42 988 C1 offenbart ebenfalls eine Bremsanlage für ein Kraftfahrzeug. Die Bremsanlage weist eine Pedaleinheit zum Erfassen einer Betätigung eines Bremspedals, eine Zentralsteuerung sowie elektrisch betätigbare Bremsaktuatoren auf. Die Bremsaktuatoren und die Zentralsteuerung sind über zwei unabhängige Übertragungskanäle miteinander verbunden.

Auch die FR2 843 353 A1 offenbart ein Bremssystem für ein Kraftfahrzeug. Das Bremssystem umfasst eine Abstandsüberwachungseinheit, ein Bremspedal und eine Steuereinheit, mittels welcher Bremsaktuatoren für jedes Rad 35 des Fahrzeugs betätigbar sind. Die Abstandsüberwachungseinheit ist über ein erstes Bussystem mit einem Motorsteuergerät sowie einer Getriebesteuereinheit und über ein zweites Bussystem mit redundanten Bremspedalsensoren und der Steuereinheit verbunden.

Die DE 199 09 496 A1 offenbart eine Getriebe-/Motorsteuerung gemäß dem Oberbegriff des Patentanspruchs 1 für ein Kraftfahrzeug mit einem Automatikgetriebe. Für den Fall einer Störung einer Signalübertragung von einer elektrischen Positionserkennungseinrichtung eines Gangwählhebels über eine elektrische Getriebesteuerung des Automatikgetriebes ist eine Warneinrichtung vorgesehen.

Aus der DE 199 40 960 A1 ist eine Diebstahlsicherungsanlage für Kraftfahrzeuge mit einem ausschließlich elektrisch schaltbaren Getriebe bekannt. Ein Getriebesteuergerät des Getriebes ist dabei über eine Kommunikationsverbindung mit einem Ver- und Entriegelungssystem des Kraftfahrzeugs verbunden, wodurch eine Wegfahrsperrenfunktionalität realisiert wird.

Die US 2003/0076221 A1 offenbart ein Shift-by-Wire-System, bei welchem wichtige Daten im Normalbetrieb sowohl über einen CAN-Bus als auch über einen Powerline-Bus ausgetauscht werden. Weniger wichtige Daten werden über den als Hauptsystem ausgebildeten CAN-Bus mit weiteren Fahrzeugkomponenten ausgetauscht.

Die DE 198 26 132 A1 offenbart ein elektrisches Bremssystem für ein Kraftfahrzeug, welches wenigstens eine wenigstens einer Radbremse zugeordnete Steuereinheit umfasst. Der Datenaustausch zwischen einzelnen Komponenten des Bremssystems geschieht mittels zweier unabhängiger Kommunikationseinrichtungen, die vorzugsweise als CAN-Bus realisiert sind.

Die DE 10 2004 008910 A1 beschreibt ein Kommunikationssystem zur Übertragung von Informationen in einem Kraftfahrzeug, wobei mehrere elektrische Komponenten über eine Datenbusstruktur und über eine Versorgungsleitungsstruktur miteinander verbunden sind. Die Informationsübertragung erfolgt im Normalfall über die Datenbusstruktur, wobei wichtige Daten gleichzeitig auch über die Versorgungsleitungsstruktur übertragen werden.

Als nachteilig ist dabei der Umstand anzusehen, dass es aufgrund der Mehrzahl an Fahrzeugkomponenten, welche mit dem als Bussystem ausgebildeten ersten Kommunikationssystem gekoppelt sind, im Normalbetrieb zu einem hohen zeitlichen Datenaufkommen und damit einer hohen Buslast kommt. Zusätzliche und zeitkritische Daten, wie sie durch X-by-wire-Systeme verursacht bzw. von diesen benötigt werden, können daher nicht oder nur unter aufwändiger und kompromissbehafteter Optimierung des Datenaustauschs der weiteren Fahrzeugkomponenten durchgeführt werden. Ist eine derartige Optimierung nicht möglich, muss eine teure und aufwändige Teilung des ersten Kommunikationssystems durchgeführt und die Teilsysteme über sogenannte Gateways wieder miteinander verbunden werden. Alternativ muss ein bereits vorhandenes Gateway um zusätzliche Äste erweitert werden. Die auszutauschenden Daten, welche in verschiedenen Ästen erfasst und benötigt werden, müssen dementsprechend über einen Vermittlungsrechner weitergeleitet werden, wozu wiederum aufwändige und kostspielige Soft- und Hardwarelösungen benötigt werden.

Aufgabe der vorliegenden Erfindung ist es daher, ein Kraftfahrzeug mit einem X-by-wire-System zu schaffen, welches unter Einhaltung der hohen Sicherheits- und Fehlertoleranzanforderungen zumindest im Normalbetrieb eine verringerte Buslast des ersten Kommunikationssystems ermöglicht.

Die Aufgabe wird erfindungsgemäß durch ein Kraftfahrzeug mit einem X-by-wire-System mit den Merkmalen des Patentanspruchs 1 sowie durch ein Verfahren zum Betreiben eines X-by-wire-Systems eines Kraftfahrzeugs mit den Merkmalen des Patentanspruchs 11 gelöst. Vorteilhafte Ausgestaltungen mit zweckmäßigen und nicht-trivialen Weiterbildungen der Erfindung sind in den jeweiligen Unteransprüchen angegeben, wobei vorteilhafte Ausgestaltungen des Kraftfahrzeugs - soweit anwendbar - als vorteilhafte Ausgestaltungen des Verfahrens und umgekehrt anzusehen sind.

Erfindungsgemäß wird eine verringerte Buslast des ersten Kommunikationssystems unter Einhaltung der hohen Sicherheits- und Fehlertoleranzanforderungen bei einem Kraftfahrzeug mit einem X-by-wire-System zumindest im Normalbetrieb dadurch ermöglicht, dass das X-by-wire-System ausgelegt ist, die Daten zwischen der Erfassungseinrichtung und dem Aktuator im Normalbetrieb nur über das zweite Kommunikationssystem und bei Defekt des zweiten Kommunikationssystems über das erste Kommunikationssystem auszutauschen. Mit anderen Worten ist im Gegensatz zum Stand der Technik vorgesehen, dass die Daten zwischen der Erfassungseinrichtung und dem Aktuator des X-by-wire-Systems im Normalbetrieb vorteilhaft mittels des ohnehin erforderlichen zweiten Kommunikationssystems, welches in der Praxis jedoch kaum oder nie benötigt wird, auszutauschen sind. Dadurch sind erhebliche Kostensenkungen gegeben, da die Buslast auf dem ersten Kommunikationssystem signifikant reduziert wird, ohne dass der Datenaustausch zwischen den weiteren Fahrzeugkomponenten aufwändig optimiert oder zusätzliche Hard- und Softwarekomponenten vorgesehen werden müssen.

In einer vorteilhaften Ausgestaltung der Erfindung ist vorgesehen, dass die Steuereinrichtung eine Ermittlungseinrichtung umfasst, mittels welcher einen Status der zugeordneten Systemkomponente charakterisierende Daten ermittelbar und im Normalbetrieb über das zweite Kommunikationssystem und bei Defekt des zweiten Kommunikationssystems über das erste Kommunikationssystem mit der Erfassungseinrichtung austauschbar sind. Dies ermöglicht es, das X-by-wire-System als Regelsystem auszubilden und durch Einbeziehen der den Status der zugeordneten Systemkomponente charakterisierenden Daten eine verbesserte Steuerung sowie eine weitere Erhöhung der Sicherheits- und Fehlertoleranzanforderungen des Kraftfahrzeugs zu gewährleisten.

In einer weiteren vorteilhaften Ausgestaltung der Erfindung ist vorgesehen, dass dem X-by-wire-System eine Signaleinrichtung zugeordnet ist, mittels welcher der Fahrerwunsch und/oder gegebenenfalls der Status der zugeordneten Systemkomponente zu signalisieren ist. Dadurch können einem Fahrer des Kraftfahrzeugs unabhängig von der jeweiligen Ausgestaltung des X-by-wire-Systems optische, akustische oder haptische Signale in Bezug auf seinen Fahrerwunsch bzw. den Status der zu steuernden Systemkomponente übermittelt werden. Beispielsweise kann bei einem als shift-by-wire-System ausgebildeten X-by-wire-System die derzeitige oder die gewünschte Fahrstufe optisch angezeigt werden. Ebenso kann der Fahrer beispielsweise bei einem fehlerhaften Status der zugeordneten Systemkomponente oder des X-by-wire-Systems über ein optisches oder akustisches Signal gewarnt und auf diesen Umstand hingewiesen werden.

Dabei hat es sich weiterhin als vorteilhaft gezeigt, dass zumindest das erste Kommunikationssystem ein Bussystem, insbesondere einen CAN- und/oder Flexray- und/oder LIN-Bus, umfasst. Mit Hilfe eines derartig ausgebildeten erstes Kommunikationssystems können die erforderlichen Datenübertragungsraten optimal an die jeweilige Ausgestaltung des Kraftfahrzeugs bzw. der weiteren Fahrzeugkomponenten angepasst werden. Gleichzeitig wird den Anforderungen des X-by-wire-Systems hinsichtlich deterministischem und fehlertolerantem Austausch von Daten unter Verwendung von kostengünstiger und standardisierter Hard- und Software Rechnung getragen. Dabei können grundsätzlich sowohl Bussysteme mit Master-Slave-Verfahren als auch demokratische Bussysteme mit gleichberechtigten Steuergeräten bzw. Fahrzeugkomponenten vorgesehen sein.

In einer weiteren vorteilhaften Ausgestaltung der Erfindung ist vorgesehen, dass die Erfassungseinrichtung mittels des zweiten Kommunikationssystems lediglich mit der Schnittstelleneinheit und/oder dem Aktuator gekoppelt ist. Dies ermöglicht neben einer Verringerung von Kosten eine weitere Verringerung der Störanfälligkeit des X-by-wire-Systems, da auf diese Weise lediglich zwei bzw. drei Kommunikationspartner miteinander gekoppelt sind. Das zweite Kommunikationssystem kann dabei sowohl kabelgebunden als auch drahtlos ausgebildet sein.

Eine besonders einfache, flexible und kostengünstige Anpassbarkeit des X-by-wire-Systems an unterschiedliche Kommunikationssysteme ist dadurch gegeben, dass die Erfassungseinrichtung und/oder die Steuereinrichtung und/oder der Aktuator über zumindest eine Schnittstelleneinheit mit dem ersten und/oder dem zweiten Kommunikationssystem gekoppelt ist bzw. sind. Bei einer Variierung des ersten und/oder zweiten Kommunikationssystems muss demnach lediglich die passende Schnittstelleneinheit ausgewählt werden, ohne dass eine Anpassung der Erfassungseinrichtung, der Steuereinrichtung oder des Aktuators selbst erforderlich wäre. Dabei kann für jedes der beiden Kommunikationssysteme eine eigene Schnittstelleneinheit vorgesehen sein. Alternativ kann auch eine Schnittstelleneinheit vorgesehen sein, mittels welcher die Erfassungseinrichtung und/oder die Steuereinrichtung und/oder der Aktuator mit beiden Kommunikationssysteme koppelbar ist bzw. sind.

Dabei werden zusätzliche Kosteneinsparungen dadurch erzielt, dass die Schnittstelleneinheit eine Diagnoseschnittstelle und/oder Applikationsschnittstelle umfasst. Derartige Diagnose- und/oder Applikationsschnittstellen, welche während der Fahrzeugentwicklung zum Übertragen und Anpassen von Parametern, Kennfeldern und dergleichen an die Erfassungseinrichtung, die Steuereinrichtung oder den Aktuator genutzt werden, sind üblicherweise auch in der späteren Serienfertigung vorhanden, werden aber nicht verwendet. Da sie demnach bereits entwickelt und grundsätzlich funktionsbereit sind, müssen sie lediglich wieder mit der Erfassungs- und/oder Steuereinrichtung und/oder dem Aktuator bzw. mit dem ersten und/oder zweiten Kommunikationssystem gekoppelt werden und stellen keinen zusätzlichen Kostenpunkt dar. Auf das Bereitstellen einer zusätzlichen Schnittstelleneinheit kann daher vorteilhaft verzichtet und zusätzliche Kosteneinsparungen erzielt werden.

Dabei hat es sich weiterhin als vorteilhaft gezeigt, dass das X-by-wire-System als shift-by-wire-System ausgebildet ist und die zugeordnete Systemkomponente eine Getriebeeinheit umfasst, wobei mittels des Aktuators des X-by-wire-Systems eine Getriebeposition der Getriebeeinheit steuerbar ist. Bei der Getriebeeinheit kann es sich dabei um ein halbautomatisches, automatisches oder automatisiertes Schaltgetriebe, um ein stufenloses Automatikgetriebe oder dergleichen handeln. Die Steuereinrichtung bzw. der Aktuator können dabei sowohl in der Getriebeeinheit integriert als auch extern angeordnet oder nachgerüstet sein. Aufgrund des üblicherweise durch shift-by-wire-Systeme verursachten hohen Aufkommens an zeitkritischen und sicherheitsrelevanten Daten, wird auf diese Weise erfindungsgemäß eine erhebliche Reduzierung der Buslast des ersten Kommunikationssystems gewährleistet.

Dabei hat es sich weiterhin als vorteilhaft gezeigt, dass der Erfassungseinrichtung ein Wählhebel zugeordnet ist, mittels welchem als Fahrerwunsch eine Getriebeposition der Getriebeeinheit wählbar ist. Dabei kann es sich bei der Getriebeposition in Abhängigkeit der jeweiligen Ausgestaltung der Getriebeeinheit beispielsweise um die üblichen Positionen P, R, N, D etc. handeln. Zusätzlich oder alternativ kann vorgesehen sein, dass mittels des Wählhebels ein manueller Hoch- oder Rückschaltwunsch des Fahrers erfasst und über die Erfassungseinrichtung an die Steuereinrichtung bzw. den Aktuator übermittelt werden kann. In einer weiteren vorteilhaften Ausgestaltung der Erfindung ist dabei eine Antriebseinrichtung vorgesehen, mittels welcher der Wählhebel in Abhängigkeit der den Fahrerwunsch und/oder gegebenenfalls der den Status der Getriebeeinheit charakterisierenden Daten zu bewegen und/oder festzulegen ist. So kann beispielsweise die momentane Getriebeposition als Status zurück an die Antriebseinrichtung übermittelt und der Wählhebel automatisch in die entsprechende Position bewegt werden. Alternativ kann der Wählhebel beispielsweise beim Auftreten eines Fehlers in der Getriebeeinheit, dem shift-by-wire-System oder einem der Kommunikationssysteme gesperrt werden, um Beschädigungen oder das Auftreten gefährlicher Fahrsituationen zu verhindern.

Ein weiterer Aspekt der Erfindung betrifft ein Verfahren zum Betreiben eines X-by-wire-Systems eines Kraftfahrzeugs, wobei das X-by-wire-System eine Erfassungseinrichtung zum Erfassen von einen Fahrerwunsch charakterisierenden Daten sowie eine Steuereinrichtung mit einem elektrisch steuerbaren Aktuator zum Steuern einer zugeordneten Systemkomponente des Kraftfahrzeugs in Abhängigkeit der erfassten Daten umfasst, wobei zumindest die Erfassungseinrichtung und der Aktuator zum Austauschen von Daten über ein erstes und ein zweites Kommunikationssystem des Kraftfahrzeugs redundant miteinander gekoppelt sind, wobei das erste Kommunikationssystem als Hauptsystem ausgebildet ist, mit welchem eine Mehrzahl von Fahrzeugkomponenten des Kraftfahrzeugs zum Austauschen von Daten im Normalbetrieb gekoppelt sind, und wobei mittels des zweiten Kommunikationssystems, welches als Rückfallsystem im Fall einer Störung des ersten Kommunikationssystems ausgebildet ist, zumindest die Erfassungseinrichtung und die Steuereinrichtung des X-by-wire-Systems miteinander gekoppelt sind, folgende Schritte umfassend:
- Erfassen der den Fahrerwunsch charakterisierenden Daten mittels der Erfassungseinrichtung; und
- Steuern der zugeordneten Systemkomponente des Kraftfahrzeugs in Abhängigkeit der den Fahrerwunsch charakterisierenden Daten mittels des Aktuators,
wobei erfindungsgemäß vorgesehen ist, dass die Daten zwischen der Erfassungseinrichtung und dem Aktuator im Normalbetrieb nur über das zweite Kommunikationssystem und bei Defekt des zweiten Kommunikationssystems über das erste Kommunikationssystem ausgetauscht werden. Mit Hilfe des erfindungsgemäßen Verfahrens wird daher zumindest im Normalbetrieb eine verringerte Buslast des ersten Kommunikationssystems unter Einhaltung der hohen Sicherheits- und Fehlertoleranzanforderungen bei einem Kraftfahrzeug mit einem X-by-wire-System gewährleistet. Weitere Vorteile sind den vorhergehenden Vorteilsbeschreibungen zu entnehmen.

Eine besonders hohe Zuverlässigkeit und Ausfallsicherheit des X-by-wire-Systems des Kraftfahrzeugs wird dadurch gewährleistet, dass in vorbestimmten Zeitabständen, insbesondere in einem 100 bis 500 ms-Zeitraster, eine Funktionsfähigkeit des ersten und/oder des zweiten Kommunikationssystem geprüft wird. Das X-by-wire-System kann dann in Abhängigkeit des Ergebnisses der Prüfung entweder ein fehlerfreies Funktionieren des ersten und/oder des zweiten Kommunikationssystem feststellen oder beim Auftreten eines Fehlers im derzeitig verwendeten Kommunikationssystem zwischen den beiden Kommunikationssystemen umschalten. Dabei hat es sich weiterhin als vorteilhaft gezeigt, dass in vorbestimmten Zeitabständen, insbesondere in einem 100 bis 500 ms-Zeitraster, eine Funktionsfähigkeit des X-by-wire-Systems geprüft wird. Diese Prüfung kann alternativ oder zusätzlich zur Funktionsprüfung des ersten und/oder zweiten Kommunikationssystem erfolgen und stellt eine weitere Möglichkeit zur Steigerung der Zuverlässigkeit und Fehlertoleranz des X-by-wire-Systems des Kraftfahrzeugs dar. Dabei kann weiterhin vorgesehen sein, dass beim Auftreten eines Fehlers in einem der Kommunikationssysteme bzw. im X-by-wire-System ein dem Fehler zugeordneter Datenspeichereintrag in einem üblicherweise vorhandenen Fehlerspeicher des Kraftfahrzeugs vorgenommen wird, um eine spätere Fehlerdiagnose zu vereinfachen und zu beschleunigen. Zusätzlich oder alternativ kann ein Fahrer des Kraftfahrzeugs über eine optische oder akustische Signaleinrichtung auf den Fehler hingewiesen und ggf. zum Aufsuchen einer Werkstatt aufgefordert werden.

Weitere Vorteile, Merkmale und Einzelheiten der Erfindung ergeben sich aus der nachfolgenden Beschreibung zweier Ausführungsbeispiele sowie anhand der Zeichnungen, in welchen gleiche oder funktionsgleiche Elemente mit identischen Bezugszeichen versehen sind. Dabei zeigen:
- Fig. 1: eine schematische Darstellung eines als shift-by-wire-System ausgebildeten X-by-wire-Systems eines Kraftfahrzeugs mit zwei Kommunikationssystemen gemäß einem ersten Ausführungsbeispiel; und
- Fig. 2: eine schematische Darstellung eines als shift-by-wire-System ausgebildeten X-by-wire-Systems eines Kraftfahrzeugs mit zwei Kommunikationssystemen gemäß einem zweiten Ausführungsbeispiel.

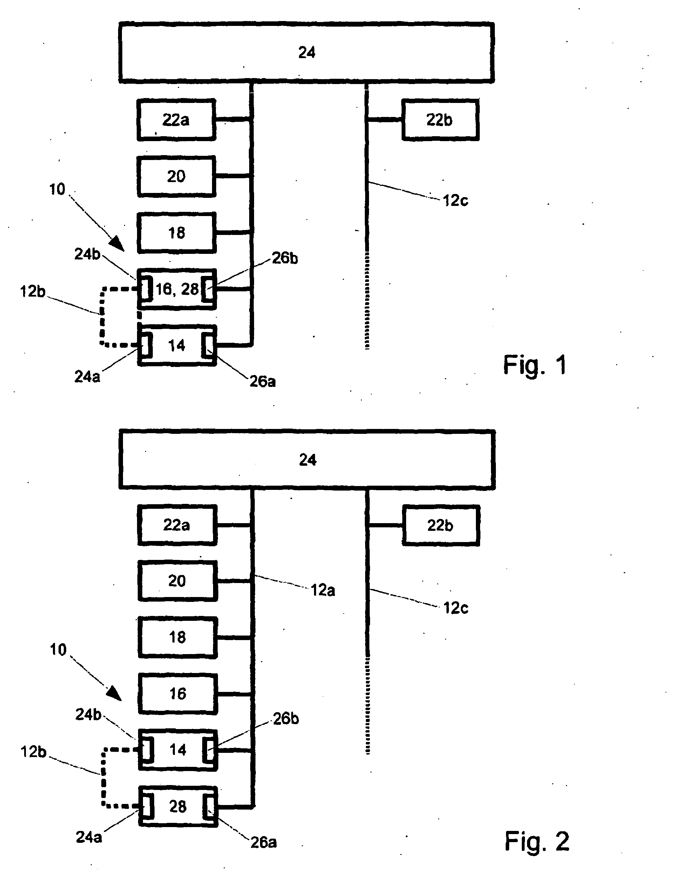

Fig. 1 zeigt eine schematische Darstellung eines als shift-by-wire-System ausgebildeten X-by-wire-Systems 10 eines Kraftfahrzeugs (nicht abgebildet) mit einem ersten Kommunikationssystem 12a und einem zweiten Kommunikationssystem 12b. Das X-by-wire-System 10 umfasst dabei eine an sich bekannte Erfassungseinrichtung 14 mit einem zugeordneten Wählhebel (nicht abgebildet) zum Erfassen eines Schaltwunschs eines Fahrers und zum Bereitstellen von den Schaltwunsch charakterisierenden Daten. Das X-by-wire-System 10 umfasst weiterhin eine als elektrische Getriebesteuerung ausgebildete Einheit mit einer Steuereinrichtung 16 und einem mechatronischen Aktuator 28 zum Steuern einer zugeordneten Getriebeeinheit (nicht abgebildet) in Abhängigkeit der bereitgestellten Daten der Erfassungseinrichtung 14. Die Steuereinrichtung 16 und der Aktuator 28 bilden dabei im vorliegenden Beispiel zusammen mit der Getriebeeinrichtung eine integrierte Baueinheit. Mit dem ersten Kommunikationssystem 12a sind weiterhin ein Motorsteuergerät 18, eine elektrische Parkbremse 20 sowie mehrere weitere Fahrzeugkomponenten 22a gekoppelt. Über ein Gateway 24 ist das erste Kommunikationssystem 12a mit einem dritten Kommunikationssystem 12c gekoppelt, an weiches zusätzliche Fahrzeugkomponenten 22b angeschlossen sind. Es ist jedoch zu betonen, dass ein derartiges Gateway 24 bzw. dritte oder weitere Kommunikationssysteme 12c nicht grundsätzlich erforderlich sind. Wie aus Fig. 1 erkennbar, sind im vorliegenden Ausführungsbeispiel lediglich die Erfassungseinrichtung 14 und die Steuereinrichtung 16 mit dem Aktuator 28 über das zweite Kommunikationssystem 12b miteinander gekoppelt. Auf diese Weise kann eine geringe Fehleranfälligkeit und damit eine hohe Zuverlässigkeit gewährleistet werden. Zudem kann das zweite Kommunikationssystem 12b im Vergleich zum ersten Kommunikationssystem 12a mit einer reduzierten Komplexität ausgebildet werden, wodurch weitere Kostensenkungen gegeben sind. Es ist demnach mit anderen Worten zwar denkbar aber nicht erforderlich, ein zweites vollständiges Bussystem bereitzustellen. Das zweite Kommunikationssystem 12b kann grundsätzlich kabelgebunden oder drahtlos ausgebildet sein. Denkbar ist auch, dass das zweite Kommunikationssystem 12b einteilig mit einer Stromversorgungsleitung des X-by-wire-Systems 10 ausgebildet ist.

Im Normalbetrieb erfolgt ein Austausch von Daten zwischen der Erfassungseinrichtung 14 und der Steuereinrichtung 16 bzw. dem Aktuator 28 über das zweite Kommunikationssystem 12b. Das erste Kommunikationssystem 12a dient lediglich als Rückfallsystem im Fall eines Ausfalls des zweiten Kommunikationssystems 12b. Dazu wird in einem vorbestimmten Zeitraster regelmäßig die Funktionsfähigkeit des zweiten Kommunikationssystems 12b sowie des X-by-wire-Systems 10 geprüft. Als Zeitraster ist dabei ein relativ grobes 100 bis 500 ms Raster ausreichend, wodurch die Buslast der beiden Kommunikationssysteme 12a, b deutlich reduziert wird. Zusätzlich kann natürlich auch eine Funktionsprüfung des ersten Kommunikationssystems 12a durchgeführt werden. Beim Auftreten eines Fehlers im zweiten Kommunikationssystem 12b kann der Austausch der Daten dann über das erste Kommunikationssystem 12a erfolgten. Für den Fall, dass ein Fehler in einem der Kommunikationssysteme 12a, b bzw. im X-by-wire-System 10 festgestellt wird, wird zudem zur Unterstützung einer Werkstatt bei der späteren Fehlerdiagnose ein dem Fehler zugeordneter Datenspeichereintrag vorgenommen. Der Datenspeichereintrag kann dabei in einem Speicherelement der betroffenen Komponente des X-by-wire-Systems 10 bzw. des jeweiligen Kommunikationssystems 12a, b oder in einem zentralen Fehlerspeicher (nicht abgebildet) des Kraftfahrzeugs vermerkt werden. Dabei kann zudem vorgesehen sein, dass das X-by-wire-System 10 in ein Notprogramm mit reduzierter Funktionalität umschaltet, um eine reduzierte Buslast auf dem ersten Kommunikationssystem 12a sicherzustellen. Weiterhin ist denkbar, dass eine akustische oder optische Fehlerwarnung, beispielsweise über eine zugeordnete Kontrolllampe, an einen Fahrer des Kraftfahrzeugs erfolgt, welche ihn auf den vorliegenden Fehler hinweist und gegebenenfalls zum Aufsuchen einer Werkstatt auffordert.

Die Erfassungseinrichtung 14 und die Steuereinrichtung 16 sind dabei über als Diagnoseschnittstellen ausgebildete Schnittstelleneinheiten 24a, b mit dem zweiten Kommunikationssystem 12b und über weitere Schnittstelleneinheiten 26a, b mit dem ersten Kommunikationssystem 12a gekoppelt, wobei die weiteren Schnittstelleneinheiten 26a, b an dieses angepasst sind. Ist das erste Kommunikationssystem 12a beispielsweise als CAN-Bus ausgebildet, können entsprechend standardisierte Schnittstelleneinheiten 26a, b verwendet werden. Denkbar ist dabei auch, dass die Schnittstelleneinheiten 24a, b und 26a; b jeweils einteilig ausgebildet sind. Weiterhin kann vorgesehen sein, dass die Erfassungseinrichtung 14 und/oder die Steuereinrichtung 16 ihrerseits weitere Sensoren bzw. Aktuatoren aufweisen, um über diese zusätzliche Redundanz eine weitere Erhöhung der Ausfallsicherheit des Kraftfahrzeugs zu gewährleisten.

Über das zweite Kommunikationssystem 12b wird einerseits der über den Wählhebel der Erfassungseinrichtung 14 erfasste Fahrerwunsch an die Getriebeeinheit übertragen. Die aktuell eingelegte Getriebeposition wird als Statusinformation wieder zurück an den Wählhebel übertragen, um diese bzw. Fehler anzuzeigen oder je nach Getriebeposition den Wählhebel über eine zugeordnete Antriebseinrichtung (nicht abgebildet) zu bewegen oder zu sperren. Die Anzeige von Fehlern kann mittels einer entsprechenden Signaleinrichtung (nicht abgebildet) akustisch oder optisch, beispielsweise über eine Kontrollleuchte erfolgen. Zusätzlich läuft über das zweite Kommunikationssystem 12b die zuvor beschriebene Sicherheitskommunikation bzw. Plausibilitätsüberprüfung der Daten ab, um Fehler im X-by-wire-System 10 bzw. den Kommunikationssystemen 12a, b zu erkennen. In Abhängigkeit der jeweiligen Ausgestaltung des Wählhebels bzw. der Getriebeeinrichtung können auch Tipp-Signale (manueller Hoch-/Rückschaltwunsch) auf die beschriebene Weise übertragen werden.

Fig. 2 zeigt eine schematische Darstellung eines als shift-by-wire-System ausgebildeten X-by-wire-Systems 10 eines Kraftfahrzeugs mit zwei Kommunikationssystemen 12a, b gemäß einem zweiten Ausführungsbeispiel, wobei der grundsätzliche Aufbau bereits aus Fig. 1 bekannt ist. Im Unterschied zu Fig. 1 besitzt die zugeordnete Getriebeeinheit des Kraftfahrzeugs keine integrierte Einheit aus Steuereinrichtung 16 und Aktuator 28, sondern eine extern angeordnete Steuereinrichtung 16 sowie einen mit einem Wählschieber der Getriebeeinheit gekoppelten Aktuator 28. Die Erfassungseinrichtung 14 und der Aktuator 28 sind dabei im vorliegenden Beispiel über jeweilige als Diagnoseschnittstelle ausgebildete Schnittstelleneinheiten 24a, b mit dem zweiten Kommunikationssystem 12b gekoppelt.

## Patentansprüche

1. Kraftfahrzeug mit:
- einem ersten Kommunikationssystem (12a), welches als Hauptsystem ausgebildet ist und mit welchem eine Mehrzahl von Fahrzeugkomponenten (14, 16, 18, 20, 22a, 28) des Kraftfahrzeugs zum Austauschen von Daten im Normalbetrieb gekoppelt sind;
- einem X-by-wire-System (10), welches eine Erfassungseinrichtung (14) zum Erfassen eines Fahrerwunschs charakterisierenden Daten sowie eine Steuereinrichtung (16) mit einem elektrisch steuerbaren Aktuator (28) zum Steuern einer zugeordneten Systemkomponente des Kraftfahrzeugs in Abhängigkeit der den Fahrerwunsch charakterisierenden Daten umfasst, wobei die Erfassungseinrichtung (14) und die Steuereinrichtung (16) über das erste Kommunikationssystem (12a) miteinander gekoppelt sind; und
- einem zweiten Kommunikationssystem (12b), welches als Rückfallsystem im Fall einer Störung des ersten Kommunikationssystems (12a) ausgebildet ist und mittels welchem zumindest die Erfassungseinrichtung (14) und der Aktuator (28) des X-by-wire-Systems (10) zum Austauschen von Daten redundant miteinander gekoppelt sind,
**dadurch gekennzeichnet, dass**
das X-by-wire-System (10) ausgelegt ist, Daten zwischen der Erfassungseinrichtung (14) und dem Aktuator (28) im Normalbetrieb nur über das zweite Kommunikationssystem (12b) und bei Defekt des zweiten Kommunikationssystems (12b) über das erste Kommunikationssystem (12a) auszutauschen.

2. Kraftfahrzeug nach Anspruch 1,
**dadurch gekennzeichnet, dass**
die Steuereinrichtung (16) eine Ermittlungseinrichtung umfasst, mittels welcher einen Status der zugeordneten Systemkomponente charakterisierende Daten ermittelbar und im Normalbetrieb über das zweite Kommunikationssystem (12b) und bei Defekt des zweiten Kommunikationssystems (12b) über das erste Kommunikationssystem (12a) mit der Erfassungseinrichtung (14) austauschbar sind.

3. Kraftfahrzeug nach Anspruch 1 oder 2,
**dadurch gekennzeichnet, dass**
dem X-by-wire-System (10) eine Signaleinrichtung zugeordnet ist, mittels welcher der Fahrerwunsch und/oder gegebenenfalls der Status der zugeordneten Systemkomponente zu signalisieren ist.

4. Kraftfahrzeug nach einem der Ansprüche 1 bis 3,
**dadurch gekennzeichnet, dass**
zumindest das erste Kommunikationssystem (12a) ein Bussystem, insbesondere einen CAN- und/oder Flexray- und/oder LIN-Bus, umfasst.

5. Kraftfahrzeug nach einem der Ansprüche 1 bis 4,
**dadurch gekennzeichnet, dass**
die Erfassungseinrichtung (14) mittels des zweiten Kommunikationssystems (12b) lediglich mit der Schnittstelleneinheit (16) und/oder dem Aktuator (28) gekoppelt ist.

6. Kraftfahrzeug nach einem der Ansprüche 1 bis 5,
**dadurch gekennzeichnet, dass**
die Erfassungseinrichtung (14) und/oder die Steuereinrichtung (28) und/oder der Aktuator (28) über zumindest eine Schnittstelleneinheit (24a, b, 26a, b) mit dem ersten und/oder dem zweiten Kommunikationssystem (12a, b) gekoppelt ist bzw. sind.

7. Kraftfahrzeug nach Anspruch 6,
**dadurch gekennzeichnet, dass**
die Schnittstelleneinheit (24a, b) eine Diagnoseschnittstelle und/oder Applikationsschnittstelle umfasst.

8. Kraftfahrzeug nach einem der Ansprüche 1 bis 7,
**dadurch gekennzeichnet, dass**
das X-by-wire-System (10) als shift-by-wire-System ausgebildet ist und die zugeordnete Systemkomponente eine Getriebeeinheit umfasst, wobei mittels des Aktuators (28) des X-by-wire-Systems (10) eine Getriebeposition der Getriebeeinheit steuerbar ist.

9. Kraftfahrzeug nach Anspruch 8,
**dadurch gekennzeichnet, dass**
der Erfassungseinrichtung (14) ein Wählhebel zugeordnet ist, mittels welchem als Fahrerwunsch eine Getriebeposition der Getriebeeinheit wählbar ist.

10. Kraftfahrzeug nach Anspruch 2 und 9,
**dadurch gekennzeichnet, dass**
eine Antriebseinrichtung vorgesehen ist, mittels welcher der Wählhebel in Abhängigkeit der den Fahrerwunsch und/oder gegebenenfalls der den Status der Getriebeeinheit charakterisierenden Daten zu bewegen und/oder festzulegen ist.

11. Verfahren zum Betreiben eines X-by-wire-Systems (10) eines Kraftfahrzeugs, wobei das X-by-wire-System (10) eine Erfassungseinrichtung (14) zum Erfassen von einen Fahrerwunsch charakterisierenden Daten sowie eine Steuereinrichtung (16) mit einem elektrisch steuerbaren Aktuator (28) zum Steuern einer zugeordneten Systemkomponente des Kraftfahrzeugs in Abhängigkeit der erfassten Daten umfasst, wobei zumindest die Erfassungseinrichtung (14) und der Aktuator (28) zum Austauschen von Daten über ein erstes und ein zweites Kommunikationssystem (12a, b) des Kraftfahrzeugs redundant miteinander gekoppelt sind, wobei das erste Kommunikationssystem (12a) als Hauptsystem ausgebildet ist, mit welchem eine Mehrzahl von Fahrzeugkomponenten (14, 16, 18, 20, 22a, 28) des Kraftfahrzeugs zum Austauschen von Daten im Normalbetrieb gekoppelt sind, und wobei mittels des zweiten Kommunikationssystems (12b), welches als Rückfallsystem im Fall einer Störung des ersten Kommunikationssystems (12a) ausgebildet ist, zumindest die Erfassungseinrichtung (14) und der Aktuator (28) des X-by-wire-Systems (10) miteinander gekoppelt sind, folgende Schritte umfassend:
- Erfassen der den Fahrerwunsch charakterisierenden Daten mittels der Erfassungseinrichtung (14); und
- Steuern der zugeordneten Systemkomponente des Kraftfahrzeugs in Abhängigkeit der den Fahrerwunsch charakterisierenden Daten mittels des Aktuators (28),
**dadurch gekennzeichnet, dass**
die Daten zwischen der Erfassungseinrichtung (14) und dem Aktuator (28) im Normalbetrieb nur über das zweite Kommunikationssystem (12b) und bei Defekt des zweiten Kommunikationssystems (12b) über das erste Kommunikationssystem (12a) ausgetauscht werden.

12. Verfahren nach Anspruch 11,
**dadurch gekennzeichnet, dass**
in vorbestimmten Zeitabständen, insbesondere in einem 100 bis 500 ms-Zeitraster, eine Funktionsfähigkeit des ersten und/oder des zweiten Kommunikationssystem (12a, b) geprüft wird.

13. Verfahren nach Anspruch 11 oder 12,
**dadurch gekennzeichnet, dass**
in vorbestimmten Zeitabständen, insbesondere in einem 100 bis 500 ms-Zeitraster, eine Funktionsfähigkeit des X-by-wire-Systems (10) geprüft wird.

## Claims

1. Motor vehicle comprising:
- a first communication system (12a), which is formed as a main system and with which a plurality of vehicle components (14, 16, 18, 20, 22a, 28) of the motor vehicle is coupled for exchanging data in normal operation;
- an X-by-wire system (10), which comprises a detection device (14) for detecting data characterising a driver command and a control device (16) comprising an electrically controllable actuator (28) for controlling an associated system component of the motor vehicle on the basis of the data characterising the driver command, the detection device (14) and the control device (16) being coupled with one another via the first communication system (12a); and
- a second communication system (12b), which is configured as a back-up system in the event of a fault in the first communication system (12a) and by means of which at least the detection device (14) and the actuator (28) of the X-by-wire system (10) are redundantly coupled with one another for exchanging data,
**characterised in that**
the X-by-wire system (10) is designed to exchange data between the detection device (14) and the actuator (28) only via the second communication system (12b) in normal operation and via the first communication system (12a) in the event of a defect in the second communication system (12b).

2. Motor vehicle according to claim 1, **characterised in that** the control device (16) comprises a determination device, by means of which a status of the data characterising the associated system component can be determined and can be exchanged with the detection device (14) via the second communication system (12b) in normal operation and via the first communication system (12a) in the event of a defect in the second communication system (12b).

3. Motor vehicle according to either claim 1 or claim 2, **characterised in that** a signal device is associated with the X-by-wire system (10), by means of which signal device the driver command and/or, if necessary, the status of the associated system component is intended to be signalled.

4. Motor vehicle according to any of claims 1 to 3, **characterised in that** at least the first communication system (12a) comprises a bus system, more particularly a CAN and/or FlexRay and/or LIN bus.

5. Motor vehicle according to any of claims 1 to 4, **characterised in that** the detection device (14) is coupled only with the interface unit (16) and/or the actuator (28) by means of the second communication system (12b).

6. Motor vehicle according to any of claims 1 to 5, **characterised in that** the detection device (14) and/or the control device (28) and/or the actuator (28) are coupled with the first and/or the second communication system (12a, b) via at least one interface unit (24a, b, 26a, b).

7. Motor vehicle according to claim 6, **characterised in that** the interface unit (24a, b) comprises a diagnostic interface and/or an application interface.

8. Motor vehicle according to any of claims 1 to 7, **characterised in that** the X-by-wire system (10) is formed as a shift-by-wire system and the associated system component comprises a transmission unit, it being possible to control a transmission position of the transmission unit by means of the actuator (28) of the X-by-wire system (10).

9. Motor vehicle according to claim 8, **characterised in that** a selector lever is associated with the detection device (14), by means of which lever a transmission position of the transmission unit can be selected as a driver command.

10. Motor vehicle according to claims 2 and 9, **characterised in that** a drive device is provided, by means of which the selector lever is to be moved and/or locked on the basis of the driver command and/or, if necessary, the data characterising the status of the transmission unit.

11. Method for operating an X-by-wire system (10) of a motor vehicle, the X-by-wire system (10) comprising a detection device (14) for detecting data characterising a driver command and a control device (16) comprising an electrically controllable actuator (28) for controlling an associated system component of the motor vehicle on the basis of the detected data, at least the detection device (14) and the actuator (28) being redundantly coupled with one another for exchanging data via a first and a second communication system (12a, b) of the motor vehicle, the first communication system (12a) being formed as a main system, with which a plurality of vehicle components (14, 16, 18, 20, 22a, 28) of the motor vehicle is coupled for exchanging data in normal operation, and, by means of the second communication system (12b), which is configured as a back-up system in the event of a fault in the first communication system (12a), at least the detection device (14) and the actuator (28) of the X-by-wire system (10) being coupled with one another, said method comprising the following steps:
- detecting the data characterising the driver command by means of the detection device (14); and
- controlling the associated system component of the motor vehicle on the basis of the data characterising the driver command by means of the actuator (28), **characterised in that** the data are exchanged between the detection device (14) and the actuator (28) only via the second communication system (12b) in normal operation and via the first communication system (12a) in the event of a defect in the second communication system (12b).

12. Method according to claim 11, **characterised in that**, at predetermined intervals, more particularly in a 100 to 500 ms time pattern, the functionality of the first and/or the second communication system (12a, b) is tested.

13. Method according to either claim 11 or claim 12, **characterised in that**, at predetermined intervals, more particularly in a 100 to 500 ms time pattern, the functionality of the X-by-wire system (10) is tested.

## Revendications

1. Véhicule automobile comprenant .
- un premier système de communication (12a), qui se présente sous la forme d'un système principal et avec lequel sont couplés une pluralité de composants (14, 16, 18, 20, 22a, 28) du véhicule automobile pour échanger des données en fonctionnement normal ;
- un système X-by-wire (10), qui comprend un dispositif de saisie (14) pour saisir des données caractérisant le souhait du chauffeur ainsi qu'un dispositif de commande (16) avec un actionneur (28) qui peut être commandé électriquement pour commander un composant du système affecté du véhicule automobile en fonction des données caractérisant le souhait du chauffeur, dans lequel le dispositif de saisie (14) et le dispositif de commande (16) sont couplés l'un à l'autre via le premier système de communication (12a) ; et
- un second système de communication (12b), qui se présente sous la forme d'un système de retour dans le cas d'une défaillance du premier système de communication (12a) et au moyen duquel au moins le dispositif de saisie (14) et l'actionneur (28) du système X-by-wire (10) sont couplés l'un à l'autre pour échanger des données de manière redondante,
caractérisé en ce qui :
le système X-by-wire (10) est dimensionné de manière à échanger des données entre le dispositif de saisie (14) et l'actionneur (28) en fonctionnement normal uniquement via le second système de communication (12b) et, en cas de défaillance du second système de communication (12b), via le premier système de communication (12a).

2. Véhicule automobile selon la revendication 1, caractérisé en ce qui :
le dispositif de commande (16) comprend un dispositif de détection au moyen duquel on peut détecter des données caractérisant un état du composant du système affecté, qui peuvent être échangées en fonctionnement normal via le second système de communication (12b) et, en cas de défaillance du second système de communication (12b), via le premier système de communication (12a), avec le dispositif de saisie (14).

3. Véhicule automobile selon la revendication 1 ou la revendication 2,
**caractérisé en ce que** :
on affecte au système X-by-wire (10) un dispositif de signalisation au moyen duquel on peut signaler le souhait du chauffeur et/ou éventuellement l'état du composant du système affecté.

4. Véhicule automobile selon l'une quelconque des revendications 1 à 3,
**caractérisé en ce que** :
au moins le premier système de communication (12a) comprend un système de bus, en particulier un bus de type CAN et/ou Flexray et/ou LIN.

5. Véhicule automobile selon l'une quelconque des revendications 1 à 4,
**caractérisé en ce que** :
le dispositif de saisie (14) est simplement couplé à l'unité d'interface (16) et/ou à l'actionneur (28) au moyen du second système de communication (12b).

6. Véhicule automobile selon l'une quelconque des revendications 1 à 5,
**caractérisé en ce que** :
le dispositif de saisie (14) et/ou le dispositif de commande (28) et/ou l'actionneur (28) est ou sont couplés via au moins une unité d'interface (24a,b, 26a,b) avec le premier et/ou le second système de communication (12a,b).

7. Véhicule automobile selon la revendication 6, **caractérisé en ce que** :
l'unité d'interface (24a,b) comprend une interface de diagnostic et/ou une interface d'application.

8. Véhicule automobile selon l'une quelconque des revendications 1 à 7,
**caractérisé en ce que** :
le système X-by-wire (10) se présente sous la forme d'un système shift-by-wire et le composant du système affecté comprend une unité de transmission, dans lequel une position de l'unité de transmission peut être commandée par l'actionneur (28) du système X-by-wire (10).

9. Véhicule automobile selon la revendication 8, **caractérisé en ce que** :
il est affecté au dispositif de saisie (14) un levier de sélection, à l'aide duquel on peut choisir la position de l'unité de transmission en fonction du souhait du chauffeur.

10. Véhicule automobile selon les revendications 2 et 9,
**caractérisé en ce que** :
il est prévu un dispositif d'entraînement à l'aide duquel le levier de sélection peut être déplacé et/ou fixé en fonction des données caractérisant le souhait du chauffeur et/ou éventuellement les données caractérisant l'unité de transmission.

11. Procédé de commande d'un système X-by-wire (10) d'un véhicule automobile, dans lequel le système X-by-wire (10) comprend un dispositif de saisie (14) pour saisir des données caractérisant un souhait du chauffeur ainsi qu'un dispositif de commande (16) avec un actionneur (28) qui peut être commandé électriquement pour commander un composant du système affecté du véhicule automobile en fonction des données saisies, dans lequel au moins le dispositif de saisie (14) et l'actionneur (28) sont couplés l'un à l'autre de manière redondante pour échanger des données via un premier et un second système de communication (12a,b) du véhicule automobile, dans lequel le premier système de communication (12a) se présente sous la forme d'un système principal, avec lequel sont couplés une pluralité de composants (14, 16, 18, 20, 22a, 28) du véhicule automobile pour échanger des données en fonctionnement normal et dans lequel, au moyen du second système de communication (12b), qui se présente sous la forme d'un système de retour dans le cas d'une panne du premier système de communication (12a), au moins le dispositif de saisie (14) et l'actionneur (28) du système X-by-wire (10) sont couplés l'un à l'autre, le procédé comprenant les étapes suivantes consistant à :
- enregistrer les données caractérisant le souhait du chauffeur au moyen du dispositif de saisie (14) ; et
- commander le composant du système affecté du véhicule automobile en fonction des données caractérisant le souhait du chauffeur au moyen de l'actionneur (28) ;
**caractérisé en ce que** :
les données sont échangées entre le dispositif de saisie (14) et l'actionneur (28) en fonctionnement normal uniquement via le second système de communication (12b) et, en cas de défaillance du second système de communication (12b), via le premier système de communication (12a).

12. Procédé selon la revendication 11,
**caractérisé en ce que** :
à intervalles de temps prédéterminés, en particulier dans une plage de temps de 100 à 500 ms, une capacité de fonctionnement du premier et/ou du second système de communication (12a,b) est testée.

13. Procédé selon la revendication 11 ou la revendication 12,
**caractérisé en ce que** :
à intervalles de temps prédéterminés, en particulier dans une plage de temps de 100 à 500 ms, une capacité de fonctionnement du système X-by-wire (10) est testée.
